# EUROPEAN PATENT SPECIFICATION

(11) **EP 4 545 322 B1**
(45) Date of publication and mention of the grant of the patent: **17.06.2026**
(21) Application number: 23306859.2
(22) Date of filing: 24.10.2023
(51) Int. Cl.: B60H 1/00

(54) **GAS GUIDING DEVICE WITH A DEFLECTOR**
GASFÜHRUNGSVORRICHTUNG MIT EINEM DEFLEKTOR
DISPOSITIF DE GUIDAGE DE GAZ AVEC UN DÉFLECTEUR

(43) Date of publication of application: 30.04.2025
(73) Proprietor: ALSTOM Holdings, 93400 Saint-Ouen-sur-Seine (FR)
(72) Inventor: DO, Huu-thi, 17300 Rochefort (FR)
(74) Representative: Plasseraud IP

(56) References cited:
- EP-A1- 3 103 679
- FR-A1- 3 101 024
- JP-A- S5 568 415

## Description

The present invention concerns a guiding device for a gaseous flow to be placed in a transport vehicle. The guiding device comprises a return guiding duct comprising at least one duct wall and extending in a longitudinal direction, and a gas intake section placed in the return guiding duct, the gaseous flow circulating in the duct wall from the gas intake section to an outlet along an upstream-downstream direction, the width, taken along a transverse direction perpendicular to the longitudinal direction, of the gas intake section being strictly inferior to the width of the return guiding duct.

The invention is in the field of ventilation, heating and gas conditioning of confined spaces. It has particular application in the field of transport vehicles.

Transport vehicles, particularly rail vehicles such as trains or subways, need to be equipped with ventilation, heating and gas-conditioning systems, known by the acronym HVAC (for "Heating Ventilation and Gas-Conditioning"), to ensure passenger comfort.

Gas circulation in a transport vehicle compartment equipped with an HVAC system must be controlled, and preferably evenly distributed. In particular, gas must circulate to be recycled and, optionally, heated or cooled as required, according to a programmed comfort temperature.

Ventilation and gas recycling systems suitable for installation in a transport vehicle compartment are known from documents EP 3 103 679 A1**,** FR 3 101 024 A1 and JP S55 68415 A**,** featuring a gas intake section, and a gas handling unit forming part of a heating, ventilation and gas conditioning system.

The heating, ventilation and gas conditioning system is known to be quite noisy which can be disturbing for the vehicle passengers. Therefore, it is advisable to place it as far as possible from the cabin passengers.

To guide the gas entering the gas intake section towards the gas handling unit, a guiding duct is thus necessary.

In known prior art systems, the gas intake section features gas diverting elements, which divide it into sub-sections, so as to ensure sufficiently high gas flow and avoid pressure loss.

However, those solutions are not well suited when the intake section is small with respect to the guiding duct.

Indeed, in such case, the gas entering the gas intake section is drawn in a larger section, i.e. the guiding duct section, and pressure losses are encountered.

One of the aims of the invention is to offer a guiding device for a gaseous flow to be placed in a transport vehicle, to guide the gas from a gas intake section towards a gas handling unit, while preserving pressure and flow rate, and to ensure homogeneous gas circulation in a transport vehicle compartment, even when the gas intake section is small compared to a guiding duct section.

To this end, the invention proposes a guiding device for a gaseous flow to be placed in a transport vehicle, as set out in independent claim 1.

The gas flow entering the small intake section being divided between an upstream flow and a downstream flow, each having a distinct circulating path, the pressure losses are limited.

Indeed, thanks to the division of the gas flux inside the return guiding duct, the gas is not drawn in a large return guiding duct after its entrance from the small intake section, but is rather drawn into several smaller return guiding duct portions.

The guiding device according to the invention may have one or more of the following features, taken independently or in any technically acceptable combination thereof:
- the main deflector has a U-shape formed by two opposite longitudinal deflector walls and at least one transversal deflector wall, the main deflector dividing the upstream flow Fᵤₚ two upstream flows circulating between one duct wall and each longitudinal deflector wall;
- the width of the main deflector, taken along the transverse direction between the two longitudinal deflector walls, is comprised between the width of the return guiding duct and the width of the gas intake section;
- the width of the main deflector, taken along the transverse direction between the two longitudinal deflector walls, is equal to the width of the gas intake section;
- the height of the main deflector, taken along an elevation direction perpendicular to both the transverse direction and the longitudinal direction, is equal to the height of the return guiding duct, the main deflector sealingly separating the upstream flow Fᵤₚ from the downstream flow Fdown, at least over a longitudinal section of the return guiding duct;
- the guiding device comprises at least one additional deflector transversally placed in the gas intake section between a first end, and a second end opposite the first end in the transverse direction;
- the or each additional deflector comprises a first section extending between the two ends along an elevation direction perpendicular to both the transverse direction and the longitudinal direction inside the return guiding duct;
- the or each additional deflector comprises a second section extending the first section in a plane comprising both the transverse direction and the longitudinal direction;
- the or each additional deflector extends transversally along the entire width of the gas intake section, the width of the or each additional deflector, taken transversally between the two ends being equal to the width of the gas intake section;
- the at least one additional deflector comprising additional deflectors being successively placed in the gas intake section, aligned along the longitudinal direction and having a decreasing height, taken along an elevation direction perpendicular to both the transverse direction and the longitudinal direction, in the upstream downstream direction;
- each end of the or each additional deflector is fixedly connected with a respective longitudinal deflector wall; and
- each end of the or each additional deflector is mechanically connected with, or welded with, or riveted with, or 3D printed with the respective longitudinal deflector wall.

Further features and advantages of the invention will be apparent from the description given below, by way of indication and by no means limitative, with reference to the appended figures, among which:
Figure 1 illustrates a guiding device extending along a longitudinal direction according to the invention,
Figure 2 is a cross-sectional view of the guiding device of Figure 1, taken in a plane containing the longitudinal direction and an elevation direction perpendicular to the longitudinal direction, and
Figure 3 is a cross-sectional view of the guiding device of Figure 1, taken in a plane containing the longitudinal direction and a transverse direction perpendicular to both the longitudinal direction and the elevation direction.

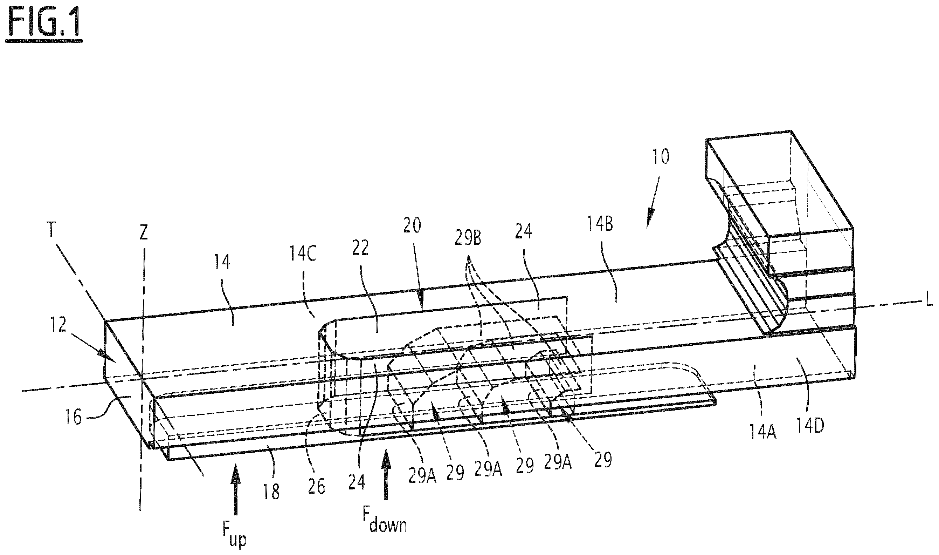

Figure 1 illustrates a guiding device 10 extending along a longitudinal direction L, suitable for installation in a transport vehicle compartment. The transport vehicle is, for example, a rail vehicle, a bus or a coach. The longitudinal direction L for example corresponds to the rear-front direction of the transport vehicle.

The guiding device 10 comprises a return guiding duct 12, which has an elongate shape along the longitudinal direction L.

The return guiding duct 12 comprises at least one duct wall 14 made of a rigid material, for example metal or plastic, and a hollow inner portion 16.

The thickness of the duct wall 14 is, for example, between 0,3 mm and 50 mm.

In the illustrated embodiment, the duct walls 14 comprise four faces 14A, 14B, 14C and 14D, which are parallel in pairs, so as to form a return guiding duct 12 with a rectangular cross-section.

The guiding device 10 comprises a gas intake section 18 placed in the return guiding duct 12, the gaseous flow circulating in the hollow inner portion 16 from the gas intake section 18 to an outlet along an upstream-downstream direction, corresponding to the direction of the gaseous flow in the return guiding duct 12.

To this end, one of the faces of the duct walls 14, which is face 14A in the example shown, has openings forming the gas intake section 18.

Face 14A is intended to face the compartment of the transport vehicle.

For example, the guiding device 10 is positioned at the ceiling level of a transport compartment, and the compartment is located below the duct wall face 14A.

The width, taken along a transverse direction T perpendicular to the longitudinal direction L, of the gas intake section 18 is strictly inferior to the width of the return guiding duct 12. The transverse direction T for example corresponds to the width of the transport vehicle.

For example, the width of the gas intake section 18 is comprised between 10 % and 80 % of the width of the return guiding duct 12.

The guiding device 10 comprises one main deflector 20 placed in the gas intake section 18.

The main deflector 20 comprises at least one deflector wall 22 separating an upstream flow Fᵤₚ, formed by the entire gas flow entering the gas intake section 18 upstream of the main deflector 20, from a downstream flow F_{down}, formed by the entire gas flow entering the gas intake section 18 downstream of the main deflector 20, in such a way that the upstream flow Fᵤₚ circulates between the deflector wall 22 and the duct wall 14 and the downstream flow F_{down} circulates inside the main deflector 20.

The main deflector 20 has for example a U-shape formed by two opposite longitudinal deflector walls 24 and one transversal deflector wall 26.

The transversal deflector wall 26 allows the division of the gas entering the gas intake section 18 between the upstream flow Fᵤₚ and the downstream flow F_{down}.

According to an embodiment, the main deflector 20 has a width taken along the transverse direction T between the two longitudinal deflector walls 24, equal to the width of the gas intake section 18.

Therefore, the main deflector 20 divides the upstream flow Fᵤₚ in two upstream flows circulating each between one duct wall 14 and each longitudinal deflector wall 24.

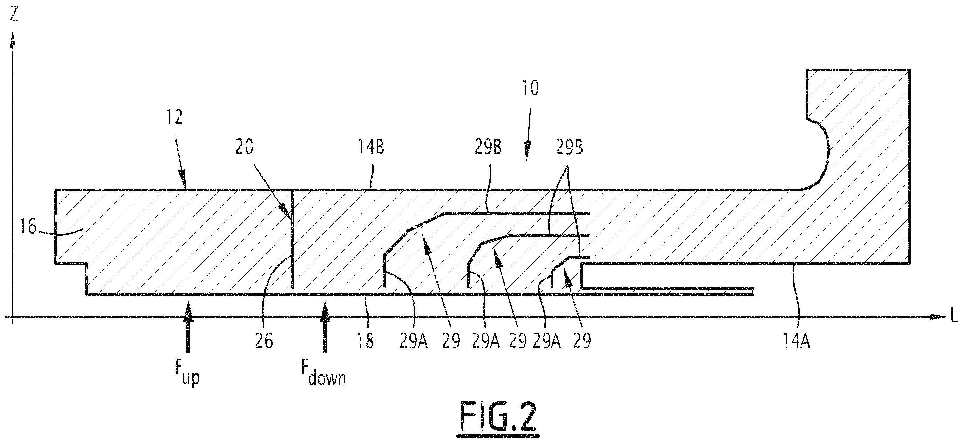

The main deflector 20 has a height, taken along an elevation direction Z perpendicular to both the transverse direction T and the longitudinal direction L, equal to the height of the guiding duct 12, as visible on Figure 2. The elevation direction for example corresponds to the height of the transport vehicle.

Therefore, the main deflector 20 sealingly separates the upstream flow Fᵤₚ from the downstream flow F_{down}, at least over a longitudinal section of the guiding duct 12.

The longitudinal section of the guiding duct 12 into which the upstream flow Fᵤₚ is separated from the downstream flow F_{down} corresponds to the length, taken along the longitudinal direction L, of the main deflector 20, and in particular of the longitudinal deflector walls 24.

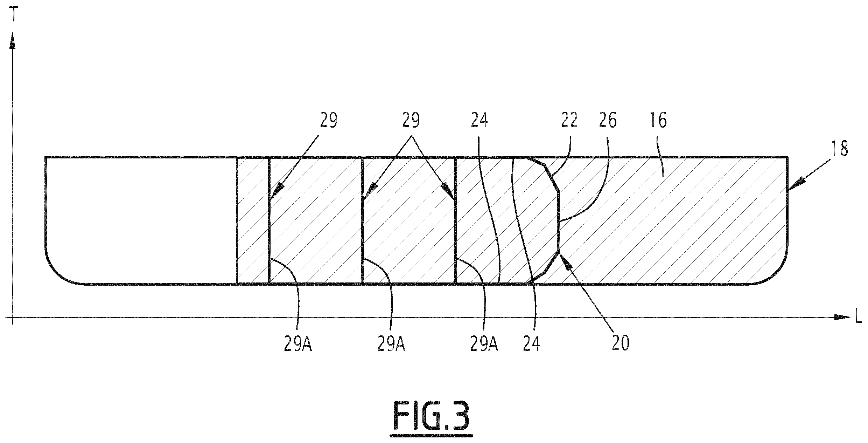

In the example shown in Figures 1 to 3, the guiding device 10 comprises three additional deflectors 29 transversally placed in the gas intake section 18. The three deflectors 29 are successively placed in the gas intake section 18, aligned along the longitudinal direction L.

The additional deflectors 29 are placed downstream from the main deflector 20. In other words, the additional deflectors 29 are placed in the region of the gas intake section 18 receiving the downstream flow F_{down}.

Each additional deflector 29 extends transversally between a first end, and a second end opposite the first end in the transverse direction T.

Each additional deflector 29 extends transversally along, for example, the entire width of the gas intake section 18. In other words, the width of each additional deflector 29, taken transversally between the two ends is equal to the width of the gas intake section 18.

As the main deflector 20 has a width equal to the width of the gas intake section 18, the additional deflectors 29 sealingly form with the main deflector 20 several gas-circulating paths.

In particular, each end of the additional deflectors 29 is fixedly connected with a respective longitudinal deflector wall 24.

For example, each end of the additional deflectors 29 is mechanically connected with, or welded with, or riveted with, or 3D printed with the respective longitudinal deflector wall 24.

Each additional deflector 29 comprises a first section 29A extending between the two ends along the elevation direction Z inside the guiding duct 12.

Therefore, the additional deflectors 29 divide, along the longitudinal direction L, the gas intake section 18 into several smaller gas intake section portions. The downstream flow F_{down} is then divided into several downstream flows, each entering a distinct portion of the gas intake section 18. The divided downstream flows rejoin together inside the guiding duct 12 upstream the additional deflectors 29.

Each additional deflector 29 further comprises a second section 29B extending the first section 29A in a plane comprising both the transverse direction T and the longitudinal direction L.

In other word, each additional deflector 29 has for example a half U-shape.

The successive additional deflectors 29 have a decreasing height, taken along the elevation direction Z, in the upstream-downstream direction, as it can be seen on Figures 1 and 2. The additional deflectors 29 create then several gas-circulating path divided along the elevation direction Z and extending longitudinally and transversally inside the guiding duct 12.

Therefore, besides dividing the downstream flow F_{down} along the longitudinal direction L into several smaller downstream flows, the additional deflectors 29 also guide each divided downstream flows into the guiding duct 12 through an isolated vertical portion of the guiding duct 12.

After the main deflector 20 and after the last additional deflector 29, in an upstream-downstream direction, the two side upstream flows and each downstream flow join together inside the guiding duct 12 and are guided toward an outlet of the guiding device 10.

In a variant, not shown, the guiding device 10 comprises more than one main deflector 20.

In another variant, not shown, the or each main deflector 20 does not have a U-shape, but a half U-shape, therefore forcing the upstream flow Fᵤₚ to circulate between one duct wall 14 and one longitudinal deflector wall 24.

The guiding device according to the invention has many advantages.

The main deflector 20 allows firstly dividing the gas entering the gas intake section into two separated intake flow, so as to accommodate the increase in size from the gas intake section 18 to the guiding duct 12.

Secondly, the main deflector 20 allows dividing the upstream flow into two side circulating flows in order to avoid pressure drops due to the bigger section of the guiding duct, a part of the guiding duct (the interior of the main deflector 20 defined by the deflector wall 22) being inaccessible for the upstream flow.

Furthermore, the additional deflectors 29 further divide the downstream flow into several smaller downstream flows to facilitate the intake of gas from the vehicle compartment towards the internal volume of the guiding duct.

Finally, the additional deflectors 29 having a section extending along the elevation direction, are useful to guide each downstream flow into respective vertically isolated circulation corridors to guide the overall gas flux more easily, in particular during the change in direction from the entrance into the gas intake section towards the longitudinal guiding duct.

## Claims

1. Guiding device (10) for a gaseous flow to be placed in a transport vehicle, comprising a return guiding duct (12) comprising at least one duct wall (14) and extending in a longitudinal direction (L), and a gas intake section (18) placed in the return guiding duct (12),
the gaseous flow circulating in the duct wall (14) from the gas intake section (18) to an outlet along an upstream-downstream direction,
the width, taken along a transverse direction (T) perpendicular to the longitudinal direction (L), of the gas intake section (18) being strictly inferior to the width of the return guiding duct (12),
the guiding device (10) comprises at least one main deflector (20), **characterized in that** the at least one main deflector (20) is placed in the gas intake section (18), the main deflector (20) comprising at least one deflector wall (22) separating an upstream flow Fᵤₚ, formed by the entire gas flow entering the gas intake section (18) upstream of the main deflector (20), from a downstream flow F_{down}, formed by the entire gas flow entering the gas intake section (18) downstream of the main deflector (20), in such a way that the upstream flow Fᵤₚ circulates between the deflector wall (22) and the duct wall (14) and the downstream flow F_{down} circulates inside the main deflector (20).

2. Guiding device (10) according to claim 1, wherein the main deflector (20) has a U-shape formed by two opposite longitudinal deflector walls (24) and at least one transversal deflector wall (26), the main deflector (20) dividing the upstream flow Fᵤₚ in two upstream flows circulating between one duct wall (14) and each longitudinal deflector wall (24).

3. Guiding device (10) according to claim 2, wherein the width of the main deflector (20), taken along the transverse direction (T) between the two longitudinal deflector walls (24), is comprised between the width of the return guiding duct (12) and the width of the gas intake section (18).

4. Guiding device (10) according to claim 2 or 3, wherein the width of the main deflector (20), taken along the transverse direction (T) between the two longitudinal deflector walls (24), is equal to the width of the gas intake section (18).

5. Guiding device (10) according to any of the preceding claims, wherein the height of the main deflector (20), taken along an elevation direction (Z) perpendicular to both the transverse direction (T) and the longitudinal direction (L), is equal to the height of the return guiding duct (12), the main deflector (20) sealingly separating the upstream flow Fᵤₚ from the downstream flow F_{down}, at least over a longitudinal section of the return guiding duct (12).

6. Guiding device (10) according to any of the preceding claims, comprising at least one additional deflector (29) transversally placed in the gas intake section (18) between a first end, and a second end opposite the first end in the transverse direction (T).

7. Guiding device (10) according to claim 6, wherein the or each additional deflector (29) comprises a first section (29A) extending between the two ends along an elevation direction (Z) perpendicular to both the transverse direction (T) and the longitudinal direction (L) inside the return guiding duct (12).

8. Guiding device (10) according to claim 7, wherein the or each additional deflector (29) comprises a second section (29B) extending the first section (29A) in a plane comprising both the transverse direction (T) and the longitudinal direction (L).

9. Guiding device (10) according to any one of claims 6 to 8, wherein the or each additional deflector (29) extends transversally along the entire width of the gas intake section (18), the width of the or each additional deflector (29), taken transversally between the two ends being equal to the width of the gas intake section (18).

10. Guiding device (10) according to any one of claims 6 to 9, the at least one additional deflector (29) comprising additional deflectors (29) being successively placed in the gas intake section (18), aligned along the longitudinal direction (L) and having a decreasing height, taken along an elevation direction (Z) perpendicular to both the transverse direction (T) and the longitudinal direction (L), in the upstream-downstream direction.

11. Guiding device (10) according to claim 2 and any one of claims 6 to 10, wherein each end of the or each additional deflector (29) is fixedly connected with a respective longitudinal deflector wall (24).

12. Guiding device (10) according to claim 11, wherein each end of the or each additional deflector (29) is mechanically connected with, or welded with, or riveted with, or 3D printed with the respective longitudinal deflector wall (24).

## Patentansprüche

1. Führungsvorrichtung (10) für einen gasförmigen Strom, welche in einem Transportfahrzeug platziert werden soll, umfassend einen Rückführungskanal (12), welcher wenigstens eine Kanalwand (14) umfasst und sich in einer longitudinalen Richtung (L) erstreckt, und einen Gaseinlassbereich (18), welcher in dem Rückführungskanal (12) platziert ist, wobei der gasförmige Strom in der Kanalwand (14) von dem Gaseinlassbereich (18) zu einem Auslass entlang einer Stromaufwärts-Stromabwärts-Richtung zirkuliert,
wobei die Breite, welche entlang einer transversalen Richtung (T) gemessen ist, welche senkrecht zu der longitudinalen Richtung (L) ist, des Gaseinlassbereichs (18) strikt geringer ist als die Breite des Rückführungskanals (12),
wobei die Führungsvorrichtung (10) wenigstens einen Hauptablenker (20) umfasst, **dadurch gekennzeichnet, dass** der wenigstens eine Hauptablenker (20) in dem Gaseinlassbereich (18) platziert ist, wobei der Hauptablenker (20) wenigstens eine Ablenkwand (22) umfasst, welche einen stromaufwärtigen Strom Fᵤₚ, welcher durch den gesamten Gasstrom gebildet ist, welcher in den Gaseinlassbereich (18) stromaufwärts des Hauptablenkers (20) eintritt, von einem stromabwärtigen Strom F_{down}, welcher durch den gesamten Gasstrom gebildet ist, welcher in den Gaseinlassbereich (18) stromabwärts des Hauptablenkers (20) eintritt, trennt, derart, dass der stromaufwärtige Strom *Fᵤₚ* zwischen der Ablenkwand (22) und der Kanalwand (14) zirkuliert und der stromabwärtige Strom F_{down} innerhalb des Hauptablenkers (20) zirkuliert.

2. Führungsvorrichtung (10) nach Anspruch 1, wobei der Hauptablenker (20) eine U-Form aufweist, welche durch zwei entgegengesetzte longitudinale Ablenkwände (24) und wenigstens eine transversale Ablenkwand (26) gebildet ist, wobei der Hauptablenker (20) den stromaufwärtigen Strom *Fᵤₚ* in zwei stromaufwärtige Ströme teilt, welche zwischen einer Kanalwand (14) und jeder longitudinalen Ablenkwand (24) zirkulieren.

3. Führungsvorrichtung (10) nach Anspruch 2, wobei die Breite des Hauptablenkers (20), welche entlang der transversalen Richtung (T) zwischen den beiden longitudinalen Ablenkwänden (24) gemessen ist, zwischen der Breite des Rückführungskanals (12) und der Breite des Gaseinlassbereichs (18) liegt.

4. Führungsvorrichtung (10) nach Anspruch 2 oder 3, wobei die Breite des Hauptablenkers (20), welche entlang der transversalen Richtung (T) zwischen den beiden longitudinalen Ablenkwänden (24) gemessen ist, gleich der Breite des Gaseinlassbereichs (18) ist.

5. Führungsvorrichtung (10) nach einem der vorhergehenden Ansprüche, wobei die Höhe des Hauptablenkers (20), welche entlang einer Höhenrichtung (Z) gemessen ist, welche senkrecht sowohl zu der transversalen Richtung (T) als auch zu der longitudinalen Richtung (L) ist, gleich der Höhe des Rückführungskanals (12) ist, wobei der Hauptablenker (20) den stromaufwärtigen Strom *Fᵤₚ* von dem stromabwärtigen Strom F_{down} wenigstens über einen longitudinalen Bereich des Rückführungskanals (12) abdichtend trennt.

6. Führungsvorrichtung (10) nach einem der vorhergehenden Ansprüche, umfassend wenigstens einen zusätzlichen Ablenker (29), welcher in dem Gaseinlassbereich (18) zwischen einem ersten Ende und einem zweiten Ende transversal platziert ist, welches dem ersten Ende in der transversalen Richtung (T) entgegengesetzt ist.

7. Führungsvorrichtung (10) nach Anspruch 6, wobei der oder jeder zusätzliche Ablenker (29) einen ersten Bereich (29A) umfasst, welcher sich zwischen den beiden Enden entlang einer Höhenrichtung (Z) erstreckt, welche senkrecht sowohl zu der transversalen Richtung (T) als auch zu der longitudinalen Richtung (L) ist, innerhalb des Rückführungskanals (12).

8. Führungsvorrichtung (10) nach Anspruch 7, wobei der oder jeder zusätzliche Ablenker (29) einen zweiten Bereich (29B) umfasst, welcher den ersten Bereich (29A) in einer Ebene erweitert, welche sowohl die transversale Richtung (T) als auch die longitudinale Richtung (L) umfasst.

9. Führungsvorrichtung (10) nach einem der Ansprüche 6 bis 8, wobei sich der oder jeder zusätzliche Ablenker (29) transversal entlang der gesamten Breite des Gaseinlassbereichs (18) erstreckt, wobei die Breite des oder jedes zusätzlichen Ablenkers (29), welche zwischen den beiden Enden gemessen ist, gleich der Breite des Gaseinlassbereichs (18) ist.

10. Führungsvorrichtung (10) nach einem der Ansprüche 6 bis 9, wobei der wenigstens eine zusätzliche Ablenker (29) zusätzliche Ablenker (29) umfasst, welche nacheinander in dem Gaseinlassbereich (18) platziert sind, welche entlang der longitudinalen Richtung (L) ausgerichtet sind und eine abnehmende Höhe, welche entlang einer Höhenrichtung (Z) gemessen ist, welche sowohl zu der transversalen Richtung (T) als auch zu der longitudinalen Richtung (L) senkrecht ist, in der Stromaufwärts-Stromabwärts-Richtung aufweisen.

11. Führungsvorrichtung (10) nach Anspruch 2 und einem der Ansprüche 6 bis 10, wobei jedes Ende des oder jedes zusätzlichen Ablenkers (29) fest mit einer jeweiligen longitudinalen Ablenkwand (24) verbunden ist.

12. Führungsvorrichtung (10) nach Anspruch 11, wobei jedes Ende des oder jedes zusätzlichen Ablenkers (29) mechanisch verbunden, oder verschweißt, oder vernietet, oder 3D-gedruckt mit der jeweiligen longitudinalen Ablenkwand (24) ist.

## Revendications

1. Dispositif de guidage (10) pour un flux gazeux à placer dans un véhicule de transport, comprenant un conduit de guidage de retour (12) comprenant au moins une paroi de conduit (14) et s'étendant dans une direction longitudinale (L), et une section d'admission de gaz (18) placée dans le conduit de guidage de retour (12),
le flux gazeux circulant dans la paroi de conduit (14) depuis la section d'admission de gaz (18) vers une sortie le long d'une direction amont-aval,
la largeur, prise le long d'une direction transversale (T) perpendiculaire à la direction longitudinale (L), de la section d'admission de gaz (18) étant strictement inférieure à la largeur du conduit de guidage de retour (12),
le dispositif de guidage (10) comprend au moins un déflecteur principal (20), **caractérisé en ce que** l'au moins un déflecteur principal (20) est placé dans la section d'admission de gaz (18), le déflecteur principal (20) comprenant au moins une paroi de déflecteur (22) séparant un flux amont Fᵤₚ, formé par l'ensemble du flux de gaz entrant dans la section d'admission de gaz (18) en amont du déflecteur principal (20), d'un flux aval F_{down}, formé par l'ensemble du flux de gaz entrant dans la section d'admission de gaz (18) en aval du déflecteur principal (20), de manière à ce que le flux amont Fᵤₚ circule entre la paroi de déflecteur (22) et la paroi de conduit (14) et que le flux aval F_{down} circule à l'intérieur du déflecteur principal (20).

2. Dispositif de guidage (10) selon la revendication 1, dans lequel le déflecteur principal (20) a une forme en U formée par deux parois de déflecteur longitudinales (24) opposées et au moins une paroi de déflecteur transversale (26), le déflecteur principal (20) divisant le flux amont Fᵤₚ en deux flux amont circulant entre une paroi de conduit (14) et chaque
paroi de déflecteur longitudinale (24).

3. Dispositif de guidage (10) selon la revendication 2, dans lequel la largeur du déflecteur principal (20), prise le long de la direction transversale (T) entre les deux parois de déflecteur longitudinales (24), est comprise entre la largeur du conduit de guidage de retour (12) et la largeur de la section d'admission de gaz (18).

4. Dispositif de guidage (10) selon la revendication 2 ou 3, dans lequel la largeur du déflecteur principal (20), prise le long de la direction transversale (T) entre les deux parois de déflecteur longitudinales (24), est égale à la largeur de la section d'admission de gaz (18).

5. Dispositif de guidage (10) selon l'une quelconque des revendications précédentes, dans lequel la hauteur du déflecteur principal (20), prise le long d'une direction d'élévation (Z) perpendiculaire à la fois à la direction transversale (T) et à la direction longitudinale (L), est égale à la hauteur du conduit de guidage de retour (12), le déflecteur principal (20) séparant de manière étanche le flux amont Fᵤₚ du flux aval F_{down}, au moins sur une section longitudinale du conduit de guidage de retour (12).

6. Dispositif de guidage (10) selon l'une quelconque des revendications précédentes, comprenant au moins un déflecteur supplémentaire (29) placé de manière transversale dans la section d'admission de gaz (18) entre une première extrémité, et une seconde extrémité opposée à la première extrémité dans la direction transversale (T).

7. Dispositif de guidage (10) selon la revendication 6, dans lequel le ou chaque déflecteur supplémentaire (29) comprend une première section (29A) s'étendant entre les deux extrémités le long d'une direction d'élévation (Z) perpendiculaire à la fois à la direction transversale (T) et à la direction longitudinale (L) à l'intérieur du conduit de guidage de retour (12).

8. Dispositif de guidage (10) selon la revendication 7, dans lequel le ou chaque déflecteur supplémentaire (29) comprend une seconde section (29B) s'étendant sur la première section (29A) dans un plan comprenant à la fois la direction transversale (T) et la direction longitudinale (L).

9. Dispositif de guidage (10) selon l'une quelconque des revendications 6 à 8, dans lequel le ou chaque déflecteur supplémentaire (29) s'étend de manière transversale le long de l'ensemble de la largeur de la section d'admission de gaz (18), la largeur du ou de chaque déflecteur supplémentaire (29), prise de manière transversale entre les deux extrémités, étant égale à la largeur de la section d'admission de gaz (18).

10. Dispositif de guidage (10) selon l'une quelconque des revendications 6 à 9, l'au moins un déflecteur supplémentaire (29) comprenant des déflecteurs supplémentaires (29) étant placés de manière successive dans la section d'admission de gaz (18), alignés le long de la direction longitudinale (L) et ayant une hauteur décroissante, prise le long d'une direction d'élévation (Z) perpendiculaire à la fois à la direction transversale (T) et à la direction longitudinale (L), dans la direction amont-aval.

11. Dispositif de guidage (10) selon la revendication 2 et l'une quelconque des revendications 6 à 10, dans lequel chaque extrémité du ou de chaque déflecteur supplémentaire (29) est reliée de manière fixe à une paroi de déflecteur longitudinale (24) respective.

12. Dispositif de guidage (10) selon la revendication 11, dans lequel chaque extrémité du ou de chaque déflecteur supplémentaire (29) est reliée de manière mécanique à, ou soudée à, ou rivetée à, ou imprimée en 3D avec la paroi de déflecteur longitudinale (24) respective.
